# EUROPEAN PATENT APPLICATION

(11) **EP 4 818 464 A1**
(43) Date of publication of application: **07.10.2026**
(21) Application number: 23961920.8
(22) Date of filing: 21.12.2023
(51) Int. Cl.: E21B 43/267, C09K 8/68

(54) **PHASE CHANGE FRACTURING METHOD**

(71) Applicant: China Petroleum & Chemical Corporation, Beijing 100728 (CN); Sinopec Shengli Oilfield Company, Dongying, Shandong 257001 (CN)
(72) Inventor: LV, Yongli, Dongying, Shandong 257001 (CN); YANG, Yong, Dongying, Shandong 257001 (CN); WANG, Zenglin, Dongying, Shandong 257001 (CN); MA, Bo, Dongying, Shandong 257001 (CN); HUANG, Zhihong, Dongying, Shandong 257001 (CN); QIAN, Qin, Dongying, Shandong 257001 (CN); ZHANG, Liaoyuan, Dongying, Shandong 257001 (CN); LI, Xiaoqian, Dongying, Shandong 257001 (CN); ZHAO, Li, Dongying, Shandong 257001 (CN); WANG, Hua, Dongying, Shandong 257001 (CN)
(74) Representative: Hoffmann Eitle
(86) International application number: PCT/CN2023/140764
(87) International publication number: WO 2025/129585

(57) **Abstract**

A phase change fracturing method. The phase change fracturing method comprises: injecting a phase change material liquid into a stratum, wherein the phase change material liquid undergoes phase change under the stratum condition to form a honeycomb solid-phase proppant, thereby completing phase change fracturing. According to the fracturing method, the phase change material liquid is injected into the stratum, and the phase change material liquid undergoes phase change to form the honeycomb solid-phase proppant, such that fracturing is implemented without additionally adding any proppant. Moreover, the formed honeycomb solid-phase proppant has high compressive strength, low deformation, and excellent flow conductivity.

## Description

### TECHNICAL FIELD

The present disclosure relates to the technical field of oil reservoir development, in particular to a phase change fracturing method.

### BACKGROUND ART

Hydraulic fracturing technology mainly involves with pumping a fracturing fluid into the reservoir at a high injection rate to generate artificial fracture in the reservoir , and then injecting a sand-carrying fluid including a proppant, thereby supporting the artificial fracture and establishing the oil and gas channels. The scholars have conducted a lot of researches in regard to a series of problems existing in conventional hydraulic fracturing technologies, such as sand plugging, residue damage, equipment wear, and the distal end of the artificial fracture cannot be effectively supported. In terms of the fracturing fluid, the researchers have developed the delayed cross-linking fracturing fluid, low-friction fracturing fluid, clean fracturing fluid, and temperature-resistant and shear-resistant fracturing fluid to reduce the pump injection pressure, decrease the reservoir damage, and increase the suspending power of said proppants; in terms of proppants, the researchers have developed the low-density proppants to achieve the purpose of enhancing the flow conductivity of the distal end of the artificial fracture . Although relevant researches have provided some assistance for improving the fracturing effect, the above problems have not been completely solved yet.

In recent years, China scholars Zhao Li-qiang et al. have proposed a novel self-supporting fracturing fluid system. The fluid system completely gets rid of the "sand-carrying" concept. During the pumping injection process of a fracturing fluid, the solid proppant is not carried, while the fracturing fluid and the proppant are combined into a fluid. When the fluid reaches the target stratum, the liquid phase is transformed into a solid phase through temperature control of the stratum to support the artificial fracture The phase change fluid plays the role of a proppant in the fracturing fluid. The common types of proppant for petroleum fracturing are natural quartz sand, artificial ceramsite, and resin-coated sand, which may account for as much as 99% of the total amount of proppant in use. The ideal proppant has the advantages such as high mechanical strength, high flow conductivity, low compatibility, low cost, low density, convenient and practical, not easy to reflux, and not easy to embed. However, these advantages can hardly be balanced at the same time. In order to effectively support and induce the fractures under closed pressure conditions, the proppant must have a certain mechanical strength (i.e., compressive resistance). At present, several high-strength proppants have been developed, including artificial ceramsite and resin-coated proppant. Artificial ceramsite proppant is more expensive than resin-coated proppant, has a higher specific gravity, and is easy to break and reflux. The resin-coated proppants are divided into two types: pre-cured resin-coated proppants (RCP) and curable resin-coated proppants (LRS). The difference is that RCP is processed by coating the substrate with resin. No further curing will occur reservoir. The cross-linking process of the LRS occurs under stress and high temperature conditions in the reservoir, and the oil well is closed after the fracturing process to allow a aispersing the gel operation. Resin-coated proppants increase the contact area between sand particles and improve the resistance of proppants against the closure pressure; during the fracturing operations, the resin layer on the surface can coat the broken fragments and particles of the broken substrate together, reducing the chance of particle movement and plugging of the pores, so that the fracture still have a high flow conductivity; the density of resin-coated proppants is relatively low, which is convenient for carrying and spreading sand, reducing the requirements on the fracturing fluid; resin-coated proppants will generate deformation, increase the contact area, thereby preventing the proppant from being embedded in soft reservoir. However, the resin-coated fracturing fluids also have unignorable disadvantages: when the closure pressure increases, the resin film on the surface of the resin-coated proppant will deform, the particles will be crushed and re-bonded, which is not conducive to the flow conductivity and permeability of the fracture. Therefore, when the closure pressure increases to a certain value, the resin-coated proppant will no longer be applicable. On this basis, the phase change proppants are modified to solve the defects of resin-coated proppants and further eliminate the concept of sand-carrying, and achieve the conditions closer to an ideal proppant.

The proppants in the prior art are basically granular, and the sphericity is pursued in order to improve the flow conductivity. The morphology of the phase change proppant in CN106190086A is bead-shaped. The phase change fluid and the non-phase change fluid are non-miscible and do not mix phase, and have similar densities, their flow processes have independent flow channels, wherein one of the fluids solidifies to form a supporting material after reaching the target position, and the other fluid flows back to retain the oil and gas flow channels. The non-uniform and non-continuous proppant deployment form transforms the conventional limited seepage capacity into unlimited seepage capacity. At the same time, the flow of two fluids can control their flow pattern through the flow ratio thereof, which makes it easy to obtain an ideal proppant deployment form.

The phase change proppant in CN108561111A also has a spherical shape, and the delayed heat generating agent also serves as a pore-forming agent, such that the spherical shape is complete, the structure is uniform, and the flow conductivity is further enhanced.

However, the granular or spherical phase change proppant is always under pressure during the curing process from a soft state to a hard state, thus it will cause a very large permeability loss, or even be compacted into a block, resulting in the failure to achieve the purpose of overall fracturing.

### SUMMARY OF THE INVENTION

The present disclosure aims to overcome the defects in the prior art that the granular or spherical phase change proppant has a low compressive strength, and is prone to deformation under stratum conditions resulting in poor flow conductivity, and provides a phase change fracturing method. According to the fracturing method, the phase change material liquid is injected into the stratum, and the phase change material liquid undergoes phase change to form the honeycomb solid-phase proppant, such that fracturing is implemented without additionally adding any proppant. Moreover, the formed honeycomb solid-phase proppant has high compressive strength, low deformation, and excellent flow conductivity.

In order to achieve the above object, the first aspect of the present disclosure provides a phase change fracturing method comprising:
injecting a phase change material liquid into a stratum, wherein the phase change material liquid undergoes phase transition under the stratum condition to form a honeycomb solid-phase proppant, thereby completing phase change fracturing.

Due to the aforementioned technical scheme, the phase change fracturing method provided by the present disclosure produces the favorable effects as follows:

In the present disclosure, a phase change material liquid is injected into the reservoir, a phase transition reaction is carried out, and a honeycomb solid-phase proppant can be formed, such that the support for fracture and micro-fracture is achieved without additionally adding any proppant, and the honeycomb solid-phase proppant has a high compressive strength and a low deformation degree, and can maintain a high flow conductivity of the solid-phase proppant under the stratum conditions.

### BRIEF DESCRIPTION OF THE DRAWINGS

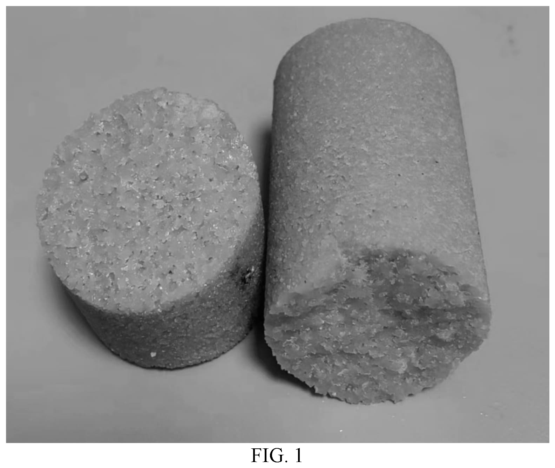

FIG. 1 is a photograph showing a honeycomb solid-phase proppant prepared in example 1.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present disclosure provides a phase change fracturing method comprisini:
injecting a phase change material liquid into a reservoir, wherein the phase change material liquid undergoes phase change under the reservoir condition to form a honeycomb solid-phase proppant, thereby completing phase change fracturing.

In the present disclosure, a phase change material liquid is injected into the reservoir, a phase transition reaction is carried out, and a honeycomb solid-phase proppant can be formed, such that the support for fracture and micro-fracture is achieved without additionally adding any proppant, and the honeycomb solid-phase proppant has a high compressive strength and a low deformation degree, and can maintain a high flow conductivity of the solid-phase proppant under the reservoir conditions.

According to the present disclosure, the honeycomb solid-phase proppant includes interconnected channels.

In the present disclosure, as shown in FIG. 1, there are interconnected channels in the honeycomb solid-phase proppant of the present disclosure, and the interconnected channels enable the solid proppant to support fracture and micro-fracture while enabling the fracture to have excellent flow conductivity, thereby improving the recovery rate of oil and gas.

According to the present disclosure, a porosity of the honeycomb solid-phase proppant is within a range of 1%-40%.

In the present disclosure, when the honeycomb solid-phase proppant has the specified porosity, which enables the solid-phase proppant to have high flow conductivity while still maintaining high compressive strength and low deformation degree.

In the present disclosure, the porosity of the honeycomb solid-phase proppant is measured by means of a saturated fluid.

In the present disclosure, the porosity of honeycomb solid-phase proppant is within a range of 1%-40%, for example, the porosity may be 1%, 2%, 3%, 4%, 5%, 6%, 7%, 8%, 9%, 10%, 12%, 15%, 20%, 25%, 30%, 35%, 40%, and a random value within a range consisting of any two numeric values thereof.

Further, the porosity of the honeycomb solid-phase proppant is within a range of 10-35%, preferably within a range of 20-30%.

According to the present disclosure, a poro size of the honeycomb solid-phase proppant is within a range of 0.1-0.7 mm.

In the present disclosure, when the pore size of the honeycomb solid-phase proppant falls into the above range, the pore size of the honeycomb solid-phase proppant is suitable, the interconnectivity is good, and it can ensure that the skeleton structure of the honeycomb solid-phase proppant remains continuous and complete, so that the honeycomb solid-phase proppant can maintain excellent permeability while withstanding high pressure.

In the present disclosure, the pore size of the honeycomb solid-phase proppant is statistically measured by using a stereomicroscope, specifically:

the honeycomb solid-phase proppant is observed under a stereomicroscope, and the pore size of the honeycomb solid-phase proppant is tested within a field of view of 1 cm×1 cm. The pore sizes of 20 pores are tested, and an average value is taken as the pore size of the honeycomb solid-phase proppant.

In the present disclosure, the pore size of the honeycomb solid-phase proppant is within a range of 0.1-0.7 mm, such as 0.1mm, 0.2mm, 0.3mm, 0.4mm, 0.5mm, 0.6mm, 0.7mm, and a random value within a range consisting of any two numeric values thereof.

Further, the honeycomb solid-phase proppant has a pore size within a range of 0.2-0.6 mm, preferably within a range of 0.3-0.5 mm.

According to the present disclosure, the pore density of the honeycomb solid-phase proppant is within a range of 20-450 per cm²

In the present disclosure, when the pore density of the honeycomb solid-phase proppant satisfies the above range, it can ensure that the pore structure formed in the honeycomb solid-phase proppant is regular and the channels with desirable connectivity can be formed between the pores, such that the honeycomb solid-phase proppant can maintain excellent permeability while withstanding high pressure.

In the present disclosure, the pore density refers to the number of pores within a certain size (1cm×1cm) of the honeycomb solid-phase proppant.

In the present disclosure, the pore density of the honeycomb solid-phase proppant is statistically measured by using a stereomicroscope, specifically:
the honeycomb solid-phase proppant is observed under a stereomicroscope, and the pore size of the honeycomb solid-phase proppant is tested within a field of view of 1cm×1cm. The pore sizes of 20 pores are tested, and an average value is taken as the pore size D (in a unit of mm) of the honeycomb solid-phase proppant. The pore density is calculated based on the following formula: pore density, number = (1cm×1cm)×porosity/pore area, wherein the pore area is calculated based on the assumption that the pore has a circular shape, i.e., pore area = π×(D/2)² , mm².

In the present disclosure, the pore density of the honeycomb solid-phase proppant is within a range of 20-450 per cm², such as 20 per cm², 30 per cm², 40 per cm², 50 per cm², 60 per cm², 70 per cm², 80 per cm², 90 per cm², 100 per cm², 150 per cm², 200 per cm², 250 per cm², 300 per cm², 350 per cm², 400 per cm², 450 per cm², and a random value within a range consisting of any two numeric values thereof.

Further, the pore density of the honeycomb solid-phase proppant is within a range of 50-300 per cm², preferably within a range of 100-200 per cm².

According to the present disclosure, a density of the honeycomb solid-phase proppant is within a range of 0.85 g/cm³-0.95 g/cm³.

In the present disclosure, the honeycomb solid-phase proppant has the above-mentioned specific density, such that the solid-phase proppant has a density different from water and the density close to crude oil, and finally allows the crude oil to pass through the gaps of the honeycomb solid-phase proppant evenly to fulfill the purpose of oil recovery.

In the present disclosure, the density of the honeycomb solid-phase proppant is within a range of 0.85 g/cm³-0.95 g/cm³, for example, the density may be 0.85 g/cm³, 0.86 g/cm³, 0.87 g/cm³, 0.88 g/cm³, 0.89 g/cm³, 0.90 g/cm³, 0.91 g/cm³, 0.92 g/cm³, 0.93 g/cm³, 0.94 g/cm³, 0.95 g/cm³, and a random value within a range consisting of any two numeric values thereof.

Further, the density of the honeycomb solid-phase proppant is within a range of 0.86 g/cm³-0.93 g/cm³, preferably within a range of 0.88 g/cm³-0.91 g/cm³.

According to the present disclosure, the compressive strength of the honeycomb solid-phase proppant within a temperature range of 60-150°C is greater than or equal to 20MPa.

In the present disclosure, the honeycomb solid-phase proppant has a high compressive strength, which can ensure that the solid-phase proppant will not resulting in inoperability after being broken or damaged under high temperature and high pressure conditions of the stratum.

In the present disclosure, the compressive strength is uniaxial compressive strength. Specifically, the test method comprising: the compressive strength is measured by using a high and low temperature universal material testing machine, and the test sample is cylindrical, with a diameter of 2.4cm and a height of 4cm.

Further, the compressive strength of the honeycomb solid-phase proppant within a temperature range of 60-150°C is greater than or equal to 30MPa.

In a specific embodiment of the present disclosure, the compressive strength of the honeycomb solid-phase proppant at 150°C is within a range of 20MPa-40MPa, preferably within a range of 30MPa-40MPa, more preferably 40MPa.

In the present disclosure, the compressive strength of the honeycomb solid-phase proppant at 150°C is within a range of 20MPa-40MPa, such as 20MPa, 25MPa, 30MPa, 35MPa, 40MPa, and a random value within a range consisting of any two numeric values thereof.

According to the present disclosure, a deformation rate of the honeycomb solid-phase proppant under a pressure of 40MPa and a temperature range of 60-150°C is 8% or less.

In the present disclosure, the honeycomb solid-phase proppant has a low deformation rate under high temperature and high pressure conditions, which can ensure that the honeycomb solid-phase proppant is not easily deformed during use in the stratum, thereby maintaining the stability of the honeycomb structure and endowing the solid-phase support agent with excellent conductivity.

In the present disclosure, the deformation rate of the honeycomb solid-phase proppant under a pressure of 40MPa and within a temperature range of 60-150°C is 8% or less, for example, the deformation rate may be 8%, 7.5%, 7%, 6.5%, 6%, 5.5%, 5%, 4.5%, 4%, 3.5%, 3%, 2.5%, 2%, 1.5%, 1%, 0.5%, 0%, and a random value within a range consisting of any two numeric values thereof.

Further, the deformation rate of the honeycomb solid-phase proppant under a pressure of 40MPa and within a temperature range of 60-150°C is 6% or less, preferably 4%.

According to the present disclosure, the phase change material liquid comprises a first component and a second component;
the first component comprises a water-soluble thermosetting resin, a solvent-type thermosetting resin, an emulsifier and water;
the second component comprises a curing agent;
the water-soluble thermosetting resin has a structure represented by formula I; 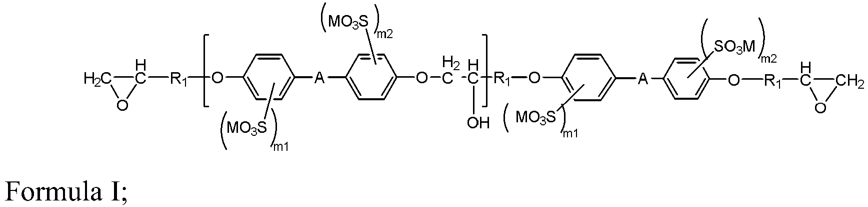
R₁ is C1-C4 alkylene;
A is 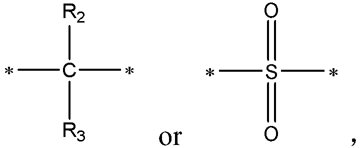 wherein R₂ and R₃ are each independently H, CH₃, CF₃ or CH₂CH₃;
0<m1+m2≤8;
M is K or Na.

In the present disclosure, the phase change material liquid contains a water-soluble thermosetting resin having a structure represented by formula I, the water-soluble thermosetting resin comprises a hydrophilic sulfonate group, which can significantly improve hydrophilicity of the water-soluble resin. When the water-soluble thermosetting resin is used together with the solvent-type thermosetting resin and the curing agent, and the materials are injected into the stratum as a phase change material liquid. A phase transition reaction can be performed under the stratum conditions to form a honeycomb solid-phase proppant.

In the present disclosure, the specific numeric values of m1 and m2 in formula I have no special meaning, but only indicate that the water-soluble thermosetting resin represented by formula I contains the SO₃M group. There is no special limitation on the specific values of m1 and m2, as long as the water-soluble thermosetting resin contains the SO₃M group.

In the present disclosure, 0<m1+m2≤8, for example, m1+m2 may be 1, 1.5, 2, 2.5, 3, 3.5, 4, 4.5, 5, 5.5, 6, 6.5, 7, 7.5, 8, and a random value within a range consisting of any two numeric values thereof
In a specific embodiment of the present disclosure, 1≤m1+m2≤5.

In a particular embodiment of the disclosure, in formula I, R₁ is C1-C3 alkylene; A is 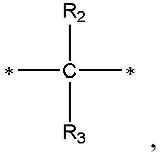 wherein R₂ and R₃ are each independently CH₃, H, CF₃ or CH₂CH₃; M is Na.

According to the present disclosure, a content of S element is within a range of 6-20wt%, based on the total weight of the water-soluble thermosetting resin.

In the present disclosure, when the content of S element in the water-soluble thermosetting resin satisfies the above range, it indicates that the water-soluble thermosetting resin contains an appropriate content of SO₃M, so that the water-soluble thermosetting resin has excellent water solubility. When it is used as a phase change material liquid, the prepared honeycomb solid-phase proppant may have an excellent pore structure, thus the solid-phase proppant has excellent flow conductivity, high compressive strength and low deformation degree.

In the present disclosure, based on the total weight of the water-soluble thermosetting resin, the content of S element is within a range of 6-20wt%, for example, the content may be 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, and a random value within a range consisting of any two numeric values thereof.

Further, based on the total weight of the water-soluble thermosetting resin, the content of S element is within a range of 10-15wt%.

According to the present disclosure, an epoxy equivalent of the water-soluble thermosetting resin is within a range of 100 g/eq-300 g/eq.

In the present disclosure, when the epoxy equivalent of the water-soluble thermosetting resin is controlled to satisfy the above range, the water-soluble thermosetting resin has a curing activity. When it is used for curing the epoxy resin, the curing strength of the cured epoxy resin can be significantly improved, so that the prepared honeycomb solid-phase proppant has a more excellent pressure bearing capacity.

In the present disclosure, an epoxy equivalent of the water-soluble thermosetting resin is within a range of 100 g/eq-300 g/eq, such as 100 g/eq, 110 g/eq, 120 g/eq, 130 g/eq, 140 g/eq, 150 g/eq, 160 g/eq, 170 g/eq, 180 g/eq, 190 g/eq, 200 g/eq, 210 g/eq, 220 g/eq, 230 g/eq, 240 g/eq, 250 g/eq, 260 g/eq, 270 g/eq, 280 g/eq, 290 g/eq, 300 g/eq, and a random value within a range consisting of any two numeric values thereof.

Further, an epoxy equivalent of the water-soluble thermosetting resin is within the range of 150 g/eq-200 g/eq.

According to the present disclosure, a weight average molecular weight of the water-soluble thermosetting resin is within a range of 2,000 g/mol - 10,000 g/mol.

In the present disclosure, a weight average molecular weight of the water-soluble thermosetting resin is within a range of 2,000 g/mol - 10,000 g/mol, for example, the weight average molecular weight may be 2,000g/mol, 2,500g/mol, 3,000g/mol, 4,000g/mol, 5,000g/mol, 6,000g/mol, 7,500g/mol, 8,000g/mol, 9,000g/mol, 10,000g/mol, and a random value within a range consisting of any two numeric values thereof.

Further, a weight average molecular weight of the water-soluble thermosetting resin is within a range of 2,500 g/mol - 8,000 g/mol, preferably within a range of 3,000 g/mol - 5,000 g/mol.

In the present disclosure, preferably, the method for preparing the water-soluble thermosetting resin comprising:
S1: contacting a bisphenol compound with a sulfonating agent in the presence of a first catalyst and water to carry out a sulfonation reaction to obtain a sulfonated bisphenol compound;
S2: contacting the sulfonated bisphenol compound with the monomer A represented by formula IA in the presence of a second catalyst and water to carry out a polycondensation reaction to obtain the water-soluble thermosetting resin; 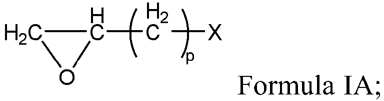 wherein p is an integer from 1 to 4, and X is Cl or Br.

In the present disclosure, the sulfonation of the bisphenol compound is achieved by contacting the sulfonating agent with the bisphenol compound, and the sulfonated bisphenol compound is subjected to a polycondensation with the monomer represented by formula IA to obtain a water-soluble thermosetting resin containing a sulfonic acid group, and the thermosetting resin has excellent hydrophilicity, can be cured in an aqueous environment, and has interconnected pores while maintaining a relatively high strength.

In the present disclosure, the bisphenol compound in step S1 is at least one selected from the group consisting of bisphenol A, bisphenol S, bisphenol B, bisphenol F and bisphenol AF.

In the present disclosure, the sulfonating agent is at least one selected from the group consisting of concentrated sulfuric acid, chlorosulfonic acid and aminosulfonic acid.

In the present disclosure, the first catalyst is a Lewis acid.

In the present disclosure, the Lewis acid may be a Lewis acid commonly used in the art, such as titanium tetrachloride, ferric chloride, ferric oxide, zirconium oxychloride, aluminum oxide, aluminum chloride, hydrated tin tetrachloride.

In the present disclosure, the molar ratio of the bisphenol compound to the sulfonating agent is 1: (1-5).

In the present disclosure, the molar ratio of the bisphenol compound to the sulfonating agent satisfies the above range, which can further meet the sulfonation degree requirement of the water-soluble thermosetting resin.

In the present disclosure, the molar ratio of the bisphenol compound to the sulfonating agent is 1: (1-5), such as 1:1, 1:1.5, 1:2, 1:2.5, 1:3, 1:3.5, 1:4, 1:4.5, 1:5, and a random value within a range consisting of any two numeric values thereof.

Further, the molar ratio of the bisphenol compound to the sulfonating agent is 1: (2-4).

According to the present disclosure, the mass ratio of the bisphenol compound to the first catalyst is 1: (0.0001-0.0008).

In the present disclosure, a mass ratio of the bisphenol compound to the first catalyst is 1: (0.0001-0.0008), for example, it may be 1:0.0001, 1:0.0002, 1:0.0003, 1:0.0004, 1:0.0005, 1:0.0006, 1:0.0007, 1:0.0008, and a random value within a range consisting of any two numeric values thereof.

In the present disclosure, the mass ratio of the bisphenol compound to the first catalyst satisfies the above range, which can reduce the reaction temperature by 20°C -30°C, and cause that the reaction conditions are milder.

Further, the mass ratio of the bisphenol compound to the first catalyst is 1: (0.0003-0.0005).

In the present disclosure, in formula IA of step S2, p is an integer of 1 to 3, and X is Cl.

In the present disclosure, the second catalyst is a base.

In the present disclosure, the base may be a conventional alkali in the art, such as NaOH, KOH, Ca(OH)₂.

Further, the second catalyst is more preferably NaOH.

In the present disclosure, the mass ratio of the sulfonated bisphenol compound to the monomer A is 1: (0.25-0.65).

In the present disclosure, the mass ratio of the sulfonated bisphenol compound to the monomer A satisfies the above range, such that the prepared water-soluble thermosetting resin has a specific epoxy equivalent that meets the requirements, so that it can undergo a phase transition reaction with the curing agent under the stratum conditions to form a honeycomb solid-phase proppant.

In the present disclosure, the mass ratio of the sulfonated bisphenol compound to the monomer A is 1: (0.25-0.65), such as 1:0.25, 1:0.3, 1:0.35, 1:0.4, 1:0.45, 1:0.5, 1:0.55, 1:0.6, 1:0.65, and a random value within a range consisting of any two numeric values thereof.

Further, the mass ratio of the sulfonated bisphenol compound to the monomer A is 1: 0.3-1:0.45.

In the present disclosure, the mass ratio of the sulfonated bisphenol compound to the second catalyst is 1: (0.1-0.5), for example, the mass ratio may be 1:0.1, 1:0.15, 1:0.2, 1:0.25, 1:0.3, 1:0.38, 1:0.4, 1:0.45, 1:0.5, and a random value within a range consisting of any two numeric values thereof, preferably 1: (0.15-0.38).

In the present disclosure, a conditions of said sulfonation reaction comprise: a reaction temperature of 120-150°C, and a reaction time of 2-6h. For example, the conditions of said sulfonation reaction comprise: a reaction temperature of 120°C, 125°C, 130°C, 135°C, 140°C, 145°C, 150°C, and a random value within a range consisting of any two numeric values thereof, and a reaction time of 2h, 2.5h, 3h, 3.5h, 4h, 4.5h, 5h, 5.5h, 6h, and a random value within a range consisting of any two numeric values thereof.

Furthermore, a conditions of said sulfonation reaction comprise: a reaction temperature of 130-140°C, and reaction time of 2-4h.

In the present disclosure, a conditions of said polycondensation reaction comprise: a reaction temperature of 40-80°C, and a reaction time of 2-4h. For example, the conditions of said polycondensation reaction comprise: a reaction temperature of 40°C, 45°C, 50°C, 55°C, 60°C, 65°C, 70°C, 75°C, 80°C, and a random value within a range consisting of any two numeric values thereof, and a reaction time of 2h, 2.5h, 3h, 3.5h, 4h, and a random value within a range consisting of any two numeric values thereof.

Further, the conditions of said polycondensation reaction comprise: a reaction temperature of 50-70°C, and a reaction time of 2-3h.

The present inventors have found that in the process of preparing a water-soluble thermosetting resin, controlling a concentration of oxygen gas in the system to be no more than 3.1 mg/L is conducive to the smooth progress of the reaction and the efficient preparation of the water-soluble thermosetting resin having a specific structure.

Exemplarily, according to a specific preferred embodiment of the present disclosure, the method for preparing the water-soluble thermosetting resin comprising :
S1: contacting a bisphenol compound selected from at least one of bisphenol A, bisphenol S, bisphenol B, bisphenol F and bisphenol AF with a sulfonating agent selected from at least one of concentrated sulfuric acid, chlorosulfonic acid and aminosulfonic acid in the presence of a Lewis acid and water, to carry out a sulfonation reaction at a reaction temperature of 130-140°C for a reaction time of 2-4h to obtain a sulfonated bisphenol compound; wherein a molar ratio of the bisphenol compound to the sulfonating agent is 1: (2-3), and a mass ratio of the bisphenol compound to the Lewis acid is 1: (0.0003-0.0005).
S2: adding an alkali into deionized water, and adding a sulfonated bisphenol compound, then dropwise adding a monomer A represented by formula IA under the temperature condition of not more than 60°C for carrying out a polycondensation reaction to obtain a water-soluble thermosetting resin under a reaction temperature of 50-70°C for a reaction time of 2-3h, wherein a mass ratio of the sulfonated bisphenol compound to the monomer A is 1: (0.3-0.45), and a mass ratio of the sulfonated bisphenol compound to the alkali is 1: (0.15-0.3).

According to the present disclosure, a hydrophilic group content N in the resin of the first component is within a range of 0.002 mol/g-0.006 mol/g
In the present disclosure, the water solubility of the first component is represented by the molar content of the hydrophilic group contained in the resin per unit mass of the first component, specifically: N = n/(m1+m2); wherein n denotes the molar quantity of said hydrophilic group, mol; m1 denotes the mass of said water-soluble thermosetting resin, g; m2 denotes the mass of said solvent-type thermosetting resin, g; and N denotes the content of the hydrophilic group contained in the resin of the first component, mol/g.

In the present disclosure, when the content N of the hydrophilic group contained in the resin of the first component satisfies the above range, it can ensure that the first component has excellent water solubility and maintains high curing strength after curing, and forming the honeycomb solid-phase proppant containing pores and interconnected channels as described in the present disclosure.

In the present disclosure, the hydrophilic group content N in the resin of the first component is within a range of 0.002 mol/g-0.006 mol/g, such as 0.002mol/g, 0.0025mol/g, 0.003mol/g, 0.0035mol/g, 0.004mol/g, 0.0045mol/g, 0.005mol/g, 0.006mol/g, and a random value within a range consisting of any two numeric values thereof.

Further, the hydrophilic group content N in the resin of the first component is within a range of 0.0025 mol/g-0.004 mol/g.

According to the present disclosure, an apparent viscosity of the first component at 25°C is within a range of 100 mPa·s - 400 mPa·s.

In the present disclosure, the first component has a low apparent viscosity, which ensures that the phase change material liquid has good injectability and can be sufficiently and evenly injected into the cracks and micro-cracks of the stratum.

In the present disclosure, the apparent viscosity of the first component at 25°C is within a range of 100 mPa·s - 400 mPa·s, such as 100 mPa·s, 150 mPa·s, 200 mPa·s, 250 mPa·s, 300 mPa·s, 350 mPa·s, 400 mPa·s, and a random value within a range consisting of any two numeric values thereof.

Further, the apparent viscosity of the first component at 25°C is within a range of 150 mPa·s - 350 mPa·s, preferably within a range of 200 mPa·s - 300 mPa·s.

According to the present disclosure, a mass ratio of the first component and the second component is 1: (0.4-0.8).

In the present disclosure, when dosages of the first component and the second component are controlled to satisfy the above range, it can ensure that the phase change material liquid has a suitable curing speed and a suitable curing time in the stratum, which will not affect the injectability of the phase change material liquid, and can ensure that the phase change material liquid undergoes a phase transition reaction in time to obtain the honeycomb solid-phase proppant.

In the present disclosure, the mass ratio of the first component and the second component is 1: (0.4-0.8), for example, the mass ratio may be 1:0.4, 1:0.45, 1:0.5, 1:0.55, 1:0.6, 1:0.65, 1:0.7, 1:0.75, 1:0.8, and a random value within a range consisting of any two numeric values thereof

Further, the mass ratio of the first component and the second component is 1: (0.6-0.8).

According to the present disclosure, the first component contains 55-93 parts by weight of the water-soluble thermosetting resin, 37-56 parts by weight of the solvent-type thermosetting resin, 22-88 parts by weight of water, and 5-15 parts by weight of the emulsifier.

In the present disclosure, when the content of each component in the first component is controlled to satisfy the above range, the water-soluble thermosetting resin and the solvent-based thermosetting resin are present in a suitable ratio, enabling the formation of various morphologies such as water-in-oil and oil-in-water. After curing, this forms a honeycomb solid-phase proppant with interconnected pores or channels.

In the present disclosure, in the first component, the content of the water-soluble thermosetting resin may be 55 parts by weight, 60 parts by weight, 65 parts by weight, 70 parts by weight, 75 parts by weight, 80 parts by weight, 85 parts by weight, 90 parts by weight, 93 parts by weight, and a random value within a range consisting of any two numeric values thereof; the content of the solvent-type thermosetting resin may be 37 parts by weight, 40 parts by weight, 43 parts by weight, 45 parts by weight, 48 parts by weight, 50 parts by weight, 53 parts by weight, 56 parts by weight, and a random value within a range consisting of any two numeric values thereof; the content of water may be 22 parts by weight, 25 parts by weight, 30 parts by weight, 35 parts by weight, 40 parts by weight, 45 parts by weight, 50 parts by weight, 55 parts by weight, 60 parts by weight, 65 parts by weight, 70 parts by weight, 75 parts by weight, 80 parts by weight, 85 parts by weight, 88 parts by weight, and a random value within a range consisting of any two numeric values thereof.

Further, the first component contains 60-80 parts by weight of the water-soluble thermosetting resin, 40-45 parts by weight of the solvent-type thermosetting resin, 25-80 parts by weight of water, and 8-13 parts by weight of the emulsifier.

According to the present disclosure, the solvent-type thermosetting resin is at least one selected from the group consisting of epoxy resin, unsaturated resin and polyimide.

According to the present disclosure, the curing agent is at least one selected from the group consisting of water-soluble polymeric polyamine, water-soluble polymeric polycarboxylic acid, water-soluble phenolic resin, small-molecule polyamine, and small-molecule polycarboxylic acid.

In a specific embodiment of the present disclosure, the water-soluble polymeric polyamine comprises a structural unit Ia, a structural unit IIa, and a structural unit IIIa;
wherein the structural unit Ia has a structure represented by formula 1a, the structural unit IIa has a structure represented by formula 2a, and the structural unit IIIa has a structure represented by at least one of formula 3a, formula 4a and formula 5 a; 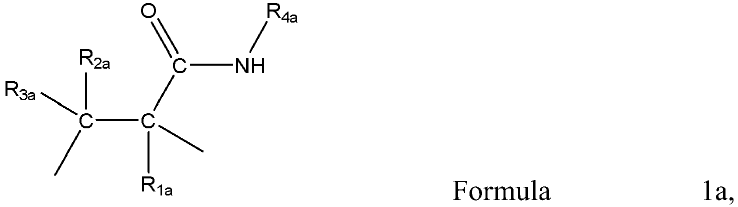 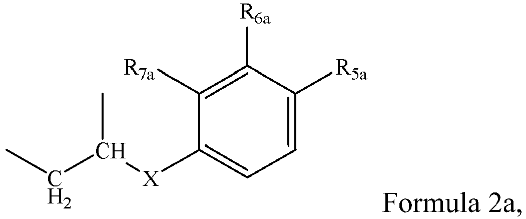 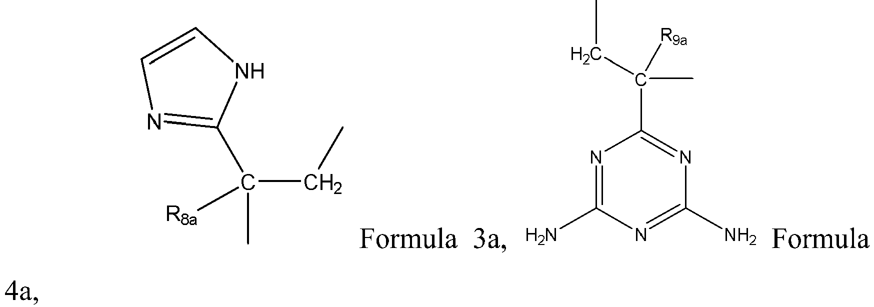 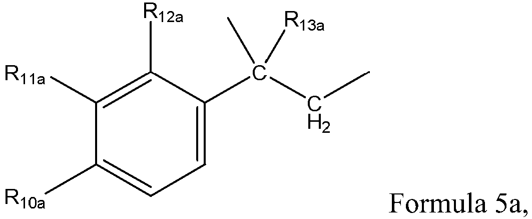
wherein, in formula 1a, R₁ₐ is -H or -CH₃, R₂ₐ and R₃ₐ are each independently -H or C1-C18 alkyl; R₄ₐ is -H, a group A, C1-C20 alkyl or -(CH₂)ₙ-O-R₂₁ₐ; R₂₁ₐ is -H or C1-C18 alkyl, n is an integer of 0-12;
the group A has a structure represented by formula 6a; 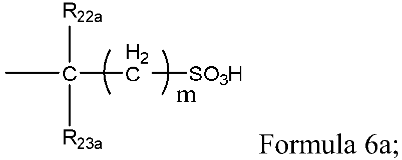
in formula 6a, R₂₂ₐ and R₂₃ₐ are each independently -H or C1-C18 alkyl, and m is an integer of 0-18;
in formula 2a, R₅ₐ, R₆ₐ and R₇ₐ are independently -H, C1-C12 alkyl or -(CH₂)ᵣ-OH, r is an integer of 1-12; X is -(CH₂)_{z}-, and z is an integer of 0-5;
in formula 3a, R₈ₐ is -H or -CH₃;
in formula 4a, R₉ₐ is -H or-CH₃;
in formula 5a, R₁₀ₐ, R₁₁ₐ and R₁₂ₐ are each independently -H or -NH₂, and at least one is -NH₂; R₁₃ₐ is -H or -CH₃.

In the present disclosure, the water-soluble polymeric polyamine comprises the structural unit Ia, the structural unit IIa and the structural unit IIIa having the above-mentioned specific structure. In particular, due to an introduction of the structural unit IIIa, the side groups of the water-soluble polymeric polyamine have a large number of amine groups. When the curing agent composition comprising the copolymer is used for curing the epoxy resin, the epoxy resin can be cured at a temperature range of 90°C-150°C.

Specifically, the water-soluble polymeric polyamine of the present disclosure contains the structural unit IIa represented by formula 2a, which can not only adjust intrinsic viscosity of the water-soluble polymeric polyamine to meet the requirements of the curing agent for epoxy resin, but also because the structural unit IIIa contains a rigid group, it can reduce the toughness of the cured product of the curing agent composed of the water-soluble polymeric polyamine, thereby improving the strength of the cured product of the curing agent composed of the unsaturated amide polymer, especially the strength of the epoxy resin.

Further, in a specific embodiment of the present disclosure, in formula 1a, R₁ₐ is -H or -CH₃, R₂ₐ and R₃ₐ are each independently -H or C1-C12 alkyl; R₄ₐ is -H, a group A, C8-C12 alkyl or -(CH₂)ₙ-O-R₂₁ₐ; R₂₁ₐ is -H or C1-C12 alkyl, n is an integer of 0-12. Preferably, R₁ₐ is -H or -CH₃, R₂ₐ and R₃ₐ are each independently -H; R₄ₐ is -H, C2 alkyl or C12 alkyl; more preferably, R₁ₐ, R₂ₐ, R₃ₐ and R₄ₐ are each -H.

In a specific embodiment of the present disclosure, the group A has a structure represented by formula 6a; 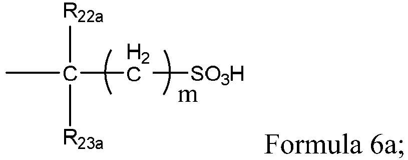 in formula 6a, R₂₂ₐ and R₂₃ₐ are each independently -H or C1-C12 alkyl, and m is an integer of 1-12; preferably, R₂₂ₐ and R₂₃ₐ are each independently -H or C1-C6 alkyl, and m is an integer of 1-6; more preferably, R₂₂ₐ and R₂₃ₐ are each independently -H or C1-C3 alkyl, and m is an integer of 1-3.

In a specific embodiment of the present disclosure, in formula 2a, R₅ₐ is -(CH₂)ᵣ-OH or -H, and r is an integer of 1-3; R₆ₐ and R₇ₐ are each independently -H; x is -(CH₂)_{z}-, and z is an integer of 0-2; more preferably, R₅ₐ, R₆ₐ and R₇ₐ are each independently -H.

In a specific embodiment of the present disclosure, in formula 3a, R₈ₐ is -H.

In a specific embodiment of the present disclosure, in formula 4a, R₉ₐ is -H.

In a specific embodiment of the present disclosure, in formula 5a, R₁₀ₐ, R₁₁ₐ, and R₁₂ₐ are each independently -H or-NH₂, and at least one is -NH₂; R₁₃ₐ is -H.

According to the present disclosure, based on the total weight of the water-soluble polymeric polyamine, a content of the structural unit Ia is within a range of 65wt%-85wt%, a content of the structural unit IIa is within a range of 5wt%-7wt%, and a content of the structural unit IIIa is within a range of 12wt%-27wt%.

In the present disclosure, when the content of each structural unit in the water-soluble polymeric polyamine is controlled to satisfy the above range, if the curing agent composition containing the water-soluble polymeric polyamine is used for curing the epoxy resin, the curing time is controllable (completely cured within 6 hours), the porosity of the cured epoxy resin is large (about 30%), the pressure bearing capacity is strong (50MPa), and the permeability is high (100 millidarcy-5 darcy).

In the present disclosure, based on the total weight of the water-soluble polymeric polyamine, a content of the structural unit Ia is 65wt%, 68wt%, 70wt%, 73wt%, 75wt%, 78wt%, 80wt%, 72wt%, 85wt%, and a random value within a range consisting of any two numeric values thereof; a content of the structural unit IIa is 5wt%, 5.5wt%, 6wt%, 6.5wt%, 7wt%, and a random value within a range consisting of any two numeric values thereof; a content of the structural unit IIIa is 12wt%, 12.5wt%, 13wt%, 13.5wt%, 14wt%, 14.5wt%, , 15wt%, 16wt%, 17wt%, 18wt%, 19wt%, 20wt%, 21wt%, 22wt%, 23wt%, 24wt%, 25wt%, 26wt%, 27wt%, and a random value within a range consisting of any two numeric values thereof.

Further, based on the total weight of the water-soluble polymeric polyamine, the content of the structural unit Ia is within the range of 70wt%-82wt%, the content of the structural unit IIa is within the range of 5wt%-6wt%, and the content of the structural unit IIIa is within the range of 12.5wt%-20wt%.

In the present disclosure, total content of the structural unit Ia, the structural unit IIa and the structural unit IIIa is 100 wt%.

In the present disclosure, content of each structural unit in the water-soluble polymeric polyamine is calculated based on the feeding amount.

According to the present disclosure, an intrinsic viscosity of the water-soluble polymeric polyamine at 25°C is within a range of 200 mL/g-1,200 mL/g, preferably within a range of 900 mL/g-1,200 mL/g.

In a specific embodiment of the present disclosure, the water-soluble polymeric polycarboxylic acid comprises a structural unit Ib, a structural unit IIb, a structural unit IIIb and a structural unit IVb;
the structural unit Ib has a structure represented by formula 1b, the structural unit IIb has a structure represented by formula 2b and/or formula 3b, the structural unit IIIb has a structure represented by formula 4b and/or formula 5b, and the structural unit IVb has a structure represented by at least one of formula 6b, formula 7b and formula 8b;
based on the total weight of the water-soluble polymeric polycarboxylic acid, the content of the structural unit Ib is within the range of 30wt%-50wt%, the content of the structural unit IIb is within the range of 30wt%-50wt%, the content of the structural unit IIIb is within the range of 4wt%-10wt%, and the content of the structural unit IVb is within the range of 10wt%-16wt%; 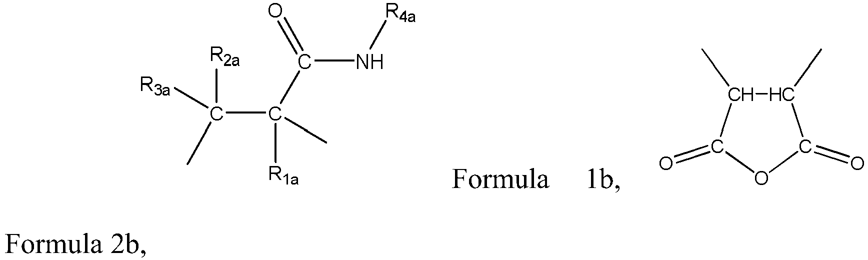 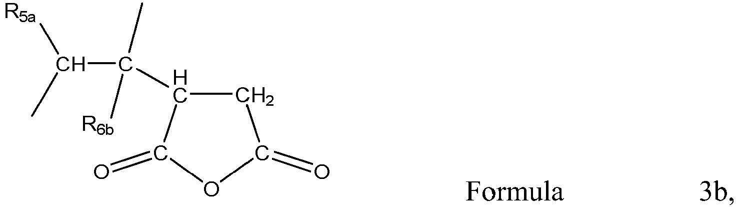 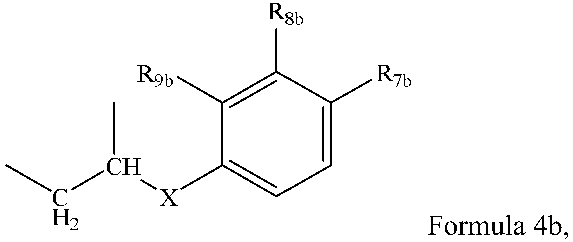 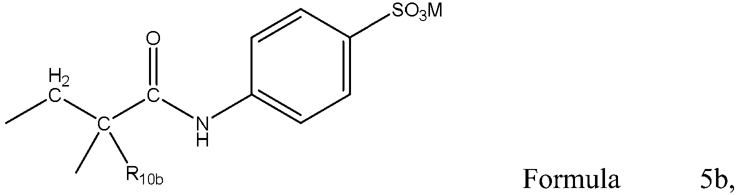 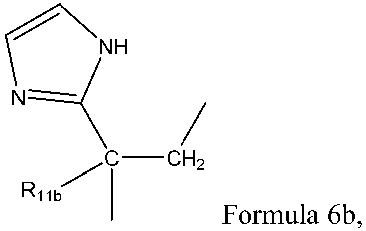 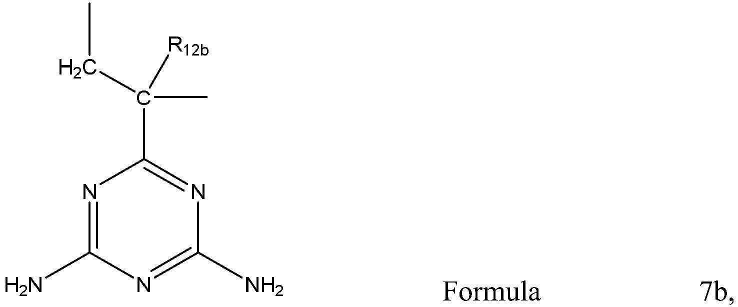 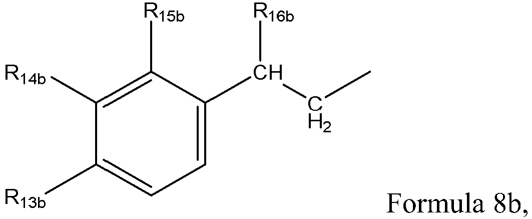
wherein, in formula 1b, R_{1b} is H or CH₃, R_{2b} and R_{3b} are each independently H or C1-C18 alkyl; R_{4b} is H, a group A or -(CH₂)ₙ-O-R_{21b}; R_{21b} is C1-C18 alkyl, n is an integer of 0-12;
the group A has a structure represented by formula 9b; 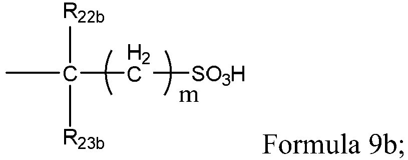
in formula 9b, R_{22b} and R_{23b} are each independently H, C1-C18 alkyl, and m is an integer of 0-18;
in formula 3b, R_{5b} and R_{6b} are each independently H or C2-C16 alkyl;
in formula 4b, R_{7b}, R_{8b} and R_{9b} are independently H, C1-C11 alkyl, -(CH₂)ᵣ-OH or -(CH₂)_{q}SO₃Q, Q is H, Na or K, r is an integer of 0-12, q is an integer of 0-10; X is -(CH₂)_{z}-, and z is an integer of 0-5;
in formula 5b, R_{10b} is H or CH₃, M is H, Na or K;
in formula 6b, R_{11b} is H or CH₃;
in formula 7b, R_{12b} is H or CH₃;
in formula 8b, R_{13b}, R_{14b}, and R_{15b} are each independently H, NH₂, F, or Br; R_{16b} is H or CH₃.

In the present disclosure, the water-soluble polymeric polycarboxylic acid comprises the structural unit Ib, structural unit IIb, structural unit IIIb and structural unit IVb having the aforementioned specific structure. In particular, due to an introduction of the structural unit IIb and the structural unit IVb, the side groups of the water-soluble polymeric polycarboxylic acid have a large number of carboxyl groups and amine groups. When the water-soluble polymeric polycarboxylic acid is used as a curing agent for epoxy resin, the epoxy resin can be cured at a low temperature (50°C-90°C) or a high temperature (90°C-150°C).

Specifically, the structural unit IIIb having a structure represented by formula 4b and/or formula 5b in the water-soluble polymeric polycarboxylic acid of the present disclosure can adjust the molecular weight of the water-soluble polymeric polycarboxylic acid to meet the requirement of the curing agent for epoxy resin, and because the structural unit IIIb contains a rigid group, it can reduce the toughness of the cured product after curing of the water-soluble polymeric polycarboxylic acid and improve hardness of the cured product.

Further, the structural unit IIb having the structure represented by formula 2b and/or formula 3b in the water-soluble polymeric polycarboxylic acid of the present disclosure, due to an introduction of the anhydride structure, it avoids a decrease in the curing activity ofthe water-soluble polymeric polycarboxylic acid when used as a curing agent, caused by the loss of carboxylic acid and amine groups resulting from the easy reaction of carboxylic acid and amine groups to form an intramolecular ring structure.

In the present disclosure, when the content of each structural unit in the water-soluble polymeric polycarboxylic acid is controlled to satisfy the above range, it not only allows the water-soluble polymeric polycarboxylic acid to have a suitable molecular weight, but also causes that the obtained water-soluble polymeric polycarboxylic acid contains a suitable content of rigid groups and active groups. When the water-soluble polymeric polycarboxylic acid is used as a curing agent for curing epoxy resin, it is ensured that the water-soluble polymeric polycarboxylic acid has active groups that meet actual needs, and the epoxy resin product obtained after curing has a high compressive strength and the like.

In the present disclosure, based on the total weight of the water-soluble polymeric polycarboxylic acid, a content of said structural unit Ib is within a range of 30wt%-50wt%, for example, it can be 30wt%, 35wt%, 40wt%, 45wt%, 50wt%, and a random value within a range consisting of any two numeric values thereof; a content of said structural unit IIb is within a range of 30wt%-50wt%, such as 30wt%, 35wt%, 40wt%, 45wt%, 50wt%, and a random value within a range consisting of any two numeric values thereof; a content of said structural unit IIIb is within a range of 4wt%-10wt%, for example, it can be 4wt%, 4.5wt%, 5wt%, 5.5wt%, 6wt%, 6.5wt%, 7wt%, 7.5wt%, 8wt%, 9wt%, 10wt%, and a random value within a range consisting of any two numeric values thereof; a content of said structural unit IVb is within a range of 10wt%-16wt%, such as 10wt%, 11wt%, 12wt%, 13wt%, 14wt%, 15wt%, 16wt%, and a random value within a range consisting of any two numeric values thereof.

Preferably, based on the total weight of the water-soluble polymeric polycarboxylic acid, the content of said structural unit Ib is within a range of 30wt%-45wt%, the content of said structural unit IIb is within a range of 35wt%-45wt%, the content of said structural unit IIIb is within a range of 6wt%-10wt%, and the content of said structural unit IVb is within a range of 12wt%-15wt%.

Further preferably, based on the total weight of the water-soluble polymeric polycarboxylic acid, the content of said structural unit Ib is within a range of 35wt%-45wt%, the content of said structural unit IIb is within a range of 40wt%-45wt%, the content of said structural unit IIIb is within a range of 8wt%-10wt%, and the content of said structural unit IVb is within a range of 14wt%-15wt%.

In the present disclosure, total content of said structural unit Ib, said structural unit IIb, said structural unit IIIb and said structural unit IVb is 100 wt%.

In the present disclosure, the content of each structural unit in the polymer is calculated based on the feeding amount of the monomer.

In a preferred embodiment of the present disclosure, the structural unit Ib has a structure represented by formula 1b, the structural unit IIb has a structure represented by formula 2b, the structural unit IIIb has a structure represented by formula 4b, and the structural unit IVb has a structure represented by formula 6b or formula 8b, preferably having a structure represented by formula 8b.

In a specific embodiment of the present disclosure, in formula 1b, R_{1b} is H or CH₃, R_{2b} and R_{3b} are each independently H or C1-C12 alkyl; R_{4b} is H, a group A or -(CH₂)ₙ-O-R_{21b}; R_{21b} is C1-C12 alkyl, and n is an integer of 1-10. Preferably, R_{1b} is H or CH₃, R_{2b} and R_{3b} are each independently H; more preferably, R_{1b} , R_{2b}, R_{3b} and R_{4b} are all H.

In the present disclosure, the group A has a structure represented by formula 9b; 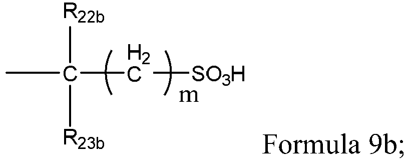 in formula 9b, R_{22b} and R_{23b} are each independently H or C1-C12 alkyl, and m is an integer of 0-13; preferably, R_{22b} and R_{23b} are each independently H or C1-C4 alkyl and m is an integer of 0-3.

In a specific embodiment of the present disclosure, in formula 3b, R_{5b} and R_{6b} are each independently H or C2-C14 alkyl; preferably, R_{5b} is H, and R_{6b} is C₂H₅.

In a specific embodiment of the disclosure, in formula 4b, R_{7b}, R_{8b} and R_{9b} are each independently H or C1-C8 alkyl, -(CH₂)ᵣ-OH or -(CH₂)_{q}SO₃Q, Q is H, Na or K, r is an integer of 0-10, q is an integer of 0-8; x is -(CH₂)_{z}-, z is an integer of 0-3; preferably, R_{7b} is -(CH₂)_{q}SO₃Q, Q is H or Na, and q is an integer of 0-2; R_{8b} and R_{9b} are each independently H; X_{b} is -(CH₂)_{z}-, and z is 0; preferably, R_{7b} is -(CH₂)_{q}SO₃Q, Q is Na, and q is 0.

In a specific embodiment of the present disclosure, in formula 5b, R_{10b} is H, and M is Na.

In a specific embodiment of the present disclosure, in formula 6b, R_{11b} is H.

In a specific embodiment of the present disclosure, in formula 7b, R_{12b} is H.

In a specific embodiment of the present disclosure, in formula 8b, R_{13b}, R_{14b} and R_{15b} are each independently H or NH₂; R_{16b} is H or NH, R_{17b} is H.

According to the present disclosure, an the intrinsic viscosity of water-soluble polymeric polycarboxylic acid under a temperature condition of 25°C is within a range of 100mL/g to 1,200mL/g, preferably within a range of 800mL/g to 1,200mL/g.

In a specific embodiment of the present disclosure, the water-soluble phenolic resin comprises a structural unit A represented by formula Ic and a structural unit B represented by formula IIc; 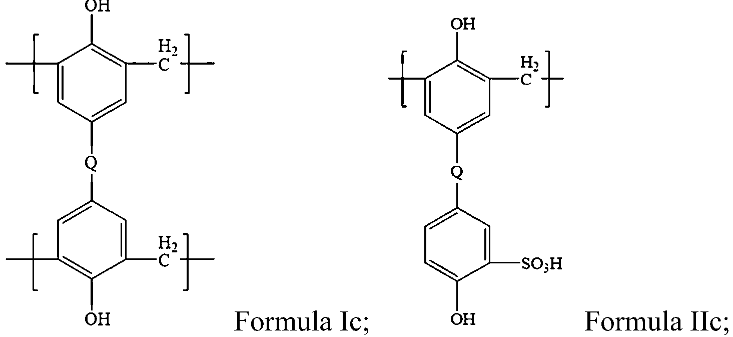 based on the total weight of the bisphenol phenolic resin, content of said structural unit A is within a range of 0-100wt%, and content of said structural unit B is within a range of 0-100wt%.

In the present disclosure, the bisphenol phenolic resin contains the specific structural units Ic and IIc, such that the molecular chain of the bisphenol phenolic resin produce a micro-crosslinked structure to form a phenolic resin with a micro-network shape, thus the molecular chain of the bisphenol phenolic resin has a certain rigidity. When the bisphenol phenolic resin is used as a curing agent for curing epoxy resin, it can significantly improve the compressive strength and flow conductivity of the epoxy resin.

In the present disclosure, the flow conductivity of the epoxy resin product is characterized by its permeability under a pressure of 40 MPa, that is, the higher the permeability of the epoxy resin product under a pressure of 40 MPa, the higher the flow conductivity of the epoxy resin product.

In the present disclosure, the content of said structural unit A and the content of said structural unit B are not zero at the same time, and sum of the content of said structural unit A and the content of said structural unit B is 100%.

According to the present disclosure, Q is 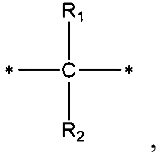 wherein R_{1c} and R_{2c} are each independently H or CH₃, preferably CH₃.

In the present disclosure, in order to further improve water solubility and storage stability of the bisphenol phenolic resin, preferably, the bisphenol phenolic resin includes both the structural unit A represented by formula Ic and the structural unit B represented by formula IIc. Specifically, based on the total weight of the bisphenol phenolic resin, the content of said structural unit A is within a range of 70wt%-80wt%, and the content of said structural unit B is within a range of 20wt%-30wt%.

In the present disclosure, when the contents of structural unit A and structural unit B in the bisphenol phenolic resin satisfy the above-mentioned specific contents, the sulfonic acid group content in the bisphenol phenolic resin is appropriate, which can ensure that the hydrophilicity of the bisphenol novolac resin is improved, thereby enabling the epoxy resin product obtained by curing of the bisphenol novolac resin maintains a high compressive strength even under high-temperature and water-containing conditions.

Further, based on the total weight of the bisphenol phenolic resin, the content of said structural unit A is within the range of 72wt%-77wt%, and the content of said structural unit B is within the range of 23wt%-28wt%.

According to the present disclosure, weight average molecular weight of the bisphenol phenolic resin is within a range of 2,000 g/mol-10,000 g/mol, preferably within a range of 3,000 g/mol-5,000 g/mol.

In a specific embodiment of the present disclosure, the small-molecule polyamine has a structure represented by formula 1d: 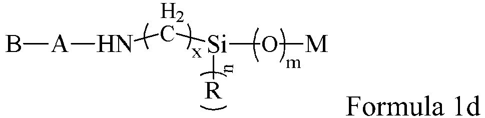
wherein M is a nano-silicon dioxide particle, x is an integer of 1-4, and R is C1-C4 alkyl;
n is an integer of 0-3, m is an integer of 1-3, n + m = 3;
A is a structural unit derived from an acid anhydride compound, and B is a structural unit derived from a polyamino compound.

In the present disclosure, the nano-silicon dioxide particles M are modified with polyamino groups on the basis of carboxyl modification, so that a dendritic morphology is presented on the surface of the nano-silicon dioxide particles M. When the nano-silicon dioxide particles M are added into the epoxy resin, a bonding reaction with the epoxy groups in the epoxy resin may be performed, which gives full play to the advantages of both the nano-silicon dioxide particles and the epoxy groups, such that the cured epoxy resin has a high mechanical strength.

According to the present disclosure, the acid anhydride compound is at least one selected from the group consisting of maleic anhydride, phthalic anhydride and succinic anhydride.

According to the present disclosure, the polyamino compound is a linear polyethylene polyamino compound with a structure represented by formula 2d or a nonlinear polyethyleneimine having a number average molecular weight of 300-3,000: 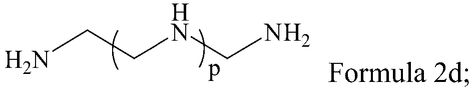 wherein p is an integer of 1-6.

Further, the number average weight of the nonlinear polyethyleneimine is within the range of 1,500-2,500.

In the present disclosure, the polyamino compound is selected from the aforementioned compounds, so that the content of amino groups in the modified nano-silicon dioxide is high, and the curing performance of the epoxy resin is further improved.

In the present disclosure, the polyethylene polyamino compound may be triethylenediamine, triethylenetetramine, pentaethylenehexamine or hexaethyleneheptamine.

According to the present disclosure, a particle size of the nano-silicon dioxide particles M is within a range of 10-500nm, and a specific surface area within a range of 10-300 m²/g.

In the present disclosure, the particle size of the nano-silicon dioxide particles M is within a range of 10-500nm, for example, the particle size may be 10nm, 20nm, 30nm, 40nm, 50nm, 100nm, 150nm, 200nm, 250nm, 300nm, 350nm, 400nm, 450nm, 500nm, and a random value within a range consisting of any two numeric values thereof; and a specific surface area within a range of 10-300 m²/g, such as 10m²/g, 20m²/g, 30m²/g, 40m²/g, 50m²/g, 100m²/g, 150m²/g, 200m²/g, 250m²/g, 300m²/g, and a random value within a range consisting of any two numeric values thereof.

Further, the nano-silicon dioxide particles M have a particle size within a range of 30-200nm, and a specific surface area within a range of 50-200 m²/g.

According to the present disclosure, a particle size of the modified nano-silicon dioxide is within a range of 10-500nm, and a specific surface area within a range of 50-500 m²/g.

In the present disclosure, when the particle size and specific surface area of the modified nano-silicon dioxide satisfy the above ranges, the smaller particle size has a desirable dispersibility in the epoxy resin, thereby improving the curing performance of the epoxy resin.

In the present disclosure, the particle size of the modified nano-silicon dioxide is within a range of 10-500nm, for example, the particle size may be 10nm, 20nm, 30nm, 40nm, 50nm, 100nm, 150nm, 200nm, 250nm, 300nm, 350nm, 400nm, 450nm, 500nm, and a random value within a range consisting of any two numeric values thereof; and a specific surface area within a range of 50-300m²/g, such as 50m²/g, 60m²/g, 70m²/g, 80m²/g, 90m²/g, 100m²/g, 150m²/g, 200m²/g, 250m²/g, 300m²/g, 400m²/g, 500m²/g, and a random value within a range consisting of any two numeric values thereof.

Further, a particle size of the modified nano-silicon dioxide is within a range of 30-500nm, and a specific surface area within a range of 50-300 m²/g.

According to the present disclosure, an amino content of the modified nano-silicon dioxide is within a range of 0.1-5 mmol/g.

In the present disclosure, when the amino content of the modified nano-silicon dioxide satisfies the above range, a dendritic morphology can be presented on the surface of the nanoparticles, thereby increasing the cross-linking speed and cross-linking density of the epoxy resin containing the modified nano-silicon dioxide.

In the present disclosure, the amino content of the modified nano-silicon dioxide is within a range of 0.1-5mmol/g, for example, it may be 0.1mmol/g, 0.2mmol/g, 0.3mmol/g, 0.4mmol/g, 0.5mmol/g, 0.6mmol/g, 0.7mmol/g, 0.8mmol/g, 0.9mmol/g, 1mmol/g, 1.5mmol/g, 2mmol/g, 2.5mmol/g, 3mmol/g, 3.5mmol/g, 4mmol/g, 4.5mmol/g, 5mmol/g, and a random value within the range consisting of any two numeric values thereof.

Further, the amino content of the modified nano-silicon dioxide is within a range of 0.5-5 mmol/g.

According to the present disclosure, the emulsifier is selected from a cationic emulsifier and/or an anionic emulsifier.

In the present disclosure, the emulsifier selected from a cationic emulsifier and/or an anionic emulsifier can further control the pore structure of the cured proppant, so that the pores and/or interconnected channels of the cured proppant are more evenly distributed, thereby further improving the flow conductivity, compressive strength and deformation resistance of the cured proppant.

In the present disclosure, the specific type of cationic emulsifier are not particularly limited, and the conventional cationic emulsifiers in the art may be adopted, such as at least one of dodecyl trimethyl ammonium chloride, tetradecyl trimethyl ammonium chloride, hexadecyl trimethyl ammonium chloride, octadecyl trimethyl ammonium chloride, docosyl trimethyl ammonium chloride, N,N-ethylene dioctadecyl dimethyl ammonium chloride, dodecyl dimethyl benzyl ammonium chloride, hexadecyl dimethyl benzyl ammonium chloride and octadecyl dimethyl benzyl ammonium chloride.

In the present disclosure, the specific type of anionic emulsifier are not particularly limited , and the conventional anionic emulsifiers in the art may be adopted. Specifically, the anionic emulsifier is at least one selected from the group consisting of sodium stearate, sodium dodecyl sulfate, sodium dodecylbenzene sulfonate, sodium oleate, sodium laurate, sodium rosinate, sodium bis(dodecylphenyl ether) disulfonate and sodium dibutylnaphthalene sulfonate.

In the present disclosure, the second component also comprises conventional auxiliary agents in the art , such as a dispersant and a curing accelerator, etc. The types and dosage of the dispersant and curing accelerator in the present disclosure are not particularly limited, the conventional dispersants and curing accelerators in the art may be adopted.

According to the present disclosure, the conditions of phase change comprise: a phase change pressure within a range of 0MPa-50MPa, a phase change temperature within a range of 70°C-150°C, and a phase change time from 10min to 6h.

In the present disclosure, by performing phase transition under the above conditions, simulating the stratum environment in the laboratory, and the process of the phase change material liquid transitioning from the liquid phase to the solid phase in the formation is simulated,, thereby obtaining the aforementioned honeycomb-like solid-phase proppant.

Further, the conditions of phase transition comprise: a phase transition pressure within the range of 10MPa-50MPa, a phase transition temperature within the range of 90°C-150°C, and a phase transition time from 30min to 3h.

In the present disclosure, under laboratory conditions, the phase transition reaction of the phase change material liquid in the stratum is simulated. Under experimental conditions, the fracturing method provided by the present disclosure can enable the phase change material liquid to form a honeycomb solid-phase proppant. It is expectable that the fracturing method provided by the present disclosure can also form a honeycomb solid-phase proppant in a stratum environment to achieve a phase change fracturing.

According to the present disclosure, the phase change material liquid is injected into the stratum at a rate of 1-20m³/min.

In the present disclosure, when the rate of the phase change material liquid injected into the stratum is controlled to satisfy the above range, the phase change material liquid can be well matched with the field application process, and is suitable for existing fracturing equipment.

Further, the phase change material liquid is injected into the stratum at a rate of 4-20m³/min.

In the present disclosure, the fracturing method further comprises: injecting a fracturing fluid into the reservoir to generate fracture in said reservoir, and then injecting a phase change material fluid into the reservoir
According to the present disclosure, preferably, the fracturing method further comprises: injecting a free radical scavenger into the reservoir.

In the present disclosure, by injecting a free radical scavenger into the reservoir, it is possible to avoid quenching of the active groups (epoxy groups) in the water-soluble thermosetting resin and the solvent-based thermosetting resin in the first component resulting from the residual peroxide and/or persulfide in the plugging agent during the gel breaking process, resulting in the phase change material liquid being unable to form an effective solid phase proppant.

According to the present disclosure, the free radical scavenger is selected from quinone compounds and/or phenolic compounds.

According to the present disclosure, an injection volume of the free radical scavenger is within a range of 1-20m³.

In a specific embodiment of the present disclosure, the fracturing method comprising:
S1: injecting a fracturing liquid into the reservoir to enable the reservoir to generate fractures;
S2: injecting a free radical scavenger with a volume of 1-10m³ into the reservoir;
S3: mixing a first component and a second component in the phase change material liquid in a ratio of 1: (0.4-0.6), injecting the mixture into the reservoir at a rate of 1-20m³/min, then injecting 1-10m³ of a free radical scavenger, subsequently injecting a displacement fluid, and shutting down for 6-8h after completion of the injection process.

In the present disclosure, under laboratory conditions, the phase transition reaction of the phase change material fluid in the stratum is simulated. Specifically, the method comprising:
(1) injecting a fracturing fluid containing peroxide and/or persulfide into an aging tank so that the fracturing fluid is located at the bottom of the aging tank;
(2) optionally injecting a free radical scavenger into the aging tank such that the free radical scavenger is disposed above the fracturing fluid;
(3) mixing a first component and a second component in the phase change material liquid, injecting the mixture into an aging tank, optionally injecting a free radical scavenger, injecting a displacement liquid, and shutting down after completion of the injection process.

In the present disclosure, based on the total weight of the fracturing fluid, the content of the peroxide and/or persulfide is within a range of 0.02wt%-0.06wt%.

In the present disclosure, there is no particular limitation on the dosage of said free radical scavenger, and an excess of the free radical scavenger is added to avoid the quenching of the epoxy groups caused by the presence of peroxide and/or persulfide. For example, the dosage of the free radical scavenger is 10-50 parts by weight relative to 1 part by weight of the peroxide and/or persulfide.

The present disclosure will be described in detail below with reference to examples. In the following examples,
the porosity of the honeycomb solid-phase proppant was measured by the osmotic pressure difference method. The specific test method was as follows: the sample was cured, the dimensions included a diameter Φ of 24mm and a length L of 40mm. The cured sample was placed in the permeameter to ensure that there was no leakage between the sample column and the permeameter. After the assembly was completed, a certain pressure difference was applied, the volume and time of the fluid flowing through the sample column were recorded, and the permeability was finally calculated.

The calculation formula of permeability was as follows: K_{g}=2Q₂LµP₀/A(P₁²-P₂²)
wherein K_{g} denoted the measured permeability, µm²; Q₂ denoted the flow rate of fluid at the rock core outlet, ml/s; L denoted a length of the rock core, cm; A denoted a cross-sectional area of the rock core, cm²; P₀ denoted the atmospheric pressure, MPa; P₁ denoted the absolute pressure at the rock core inlet, MPa; P₂ denoted the absolute pressure at the rock core outlet, MPa; µ denoted the fluid viscosity, mPa·s.

The pore size of the honeycomb solid-phase proppant was statistically measured by using a stereomicroscope, specifically:
the honeycomb solid-phase proppant was observed under a stereomicroscope, and the pore size of the honeycomb solid-phase proppant was tested within a field of view of 1 cm×1 cm. The pore sizes of 20 pores were tested, and an average value was taken as the pore size of the honeycomb solid-phase proppant.

The pore density of the honeycomb solid-phase proppant was statistically measured by using a stereomicroscope, specifically:

The honeycomb solid-phase proppant was observed under a stereomicroscope, specifically:
the honeycomb solid-phase proppant was observed under a stereomicroscope and the pore size of the honeycomb solid-phase proppant was tested within a field of view of 1cm×1cm. The pore sizes of 20 pores were tested, and an average value was taken as the pore size D (in a unit of mm) of the honeycomb solid-phase proppant. The pore density was calculated based on the following formula: pore density, number = (1cm×1cm)×porosity/pore area, wherein the pore area was calculated based on the assumption that the pore had a circular shape, i.e., pore area = π×(D/2)² , mm².

The compressive strength of the honeycomb solid-phase proppant was measured by using a high and low temperature universal material testing machine, in particular, the test sample had a cylindrical shape with a diameter of 2.4cm and a height of 4cm.

The density of the honeycomb solid-phase proppant was calculated by the mass and the volume.

The deformation rate of the honeycomb solid-phase proppant was measured according to the following method:
under the normal pressure and the temperature of 25°C, the diameter of the tested honeycomb solid-phase proppant was D0, under the pressure of 40MPa and the high temperature of 150°C, the honeycomb solid-phase proppant was extruded by using a high and low temperature universal material testing machine. The diameter of the extruded honeycomb solid-phase proppant was D1. The deformation rate = (D0-D1)/D0×100%.

The apparent viscosity of the phase change material liquid was measured by using a six-speed rotational viscometer. Specifically, 300 ml of the phase change material liquid was placed in the sample chamber, the temperature was set at 25°C, the rotation speed was set at 100 rad/min, and the apparent viscosity value was read after 1 minute.

The weight average molecular weight of the water-soluble thermosetting resin was measured by gel chromatography. Specifically, a certain amount of resin was dissolved in chromatographically pure tetrahydrofuran (THF) to prepare a solution to be tested, the mobile phase was THF, and the reference substance was polystyrene. The weight average molecular weight of the water-soluble thermosetting resin was measured.

The content of S element in the water-soluble thermosetting resin and the molar quantity of hydrophilic group contained in the resin in the first component were measured by an element analyzer, specifically, the measurement was performed according to an oxygen bottle combustion method.

The epoxy equivalent of the water-soluble thermosetting resin was measured by the hydrochloric acid-pyridine method. Specifically, 0.5g of the sample was added into 25 mL of hydrochloric acid-acetone solution, and the reaction was performed at 45°C for 3.5h. 25 mL of hydrochloric acid-acetone solution was pipetted, added with 3 droplets of a mixed indicator, and the blank titration (titration must be completed within 30 seconds) was performed. The end point of titration was determined when the color did not fade for 5 seconds. The volume of the NaOH standard solution consumed was denoted as V₀, mL; the mixed solution pipetted, added with three droplets of a mixed indicator (titration must be completed within 30 seconds), and titration was performed by using the sodium hydroxide standard solution after the color did not fade for 5 seconds. The consumed amount of 0.5 mol/L NaOH standard solution was recorded and denoted as V, mL, the epoxy equivalent was calculated according to the following formula:
$EV = \frac{\left({V}_{0}-V\right) C}{m \times 10}$
wherein EV = epoxy equivalent, mol/100g; V₀ = volume of sodium hydroxide standard solution consumed in blank experiment, mL; V = volume of sodium hydroxide standard solution consumed by the test sample, mL; C = concentration of NaOH standard solution, mol/L; m = test mass, g.

Water-soluble phenolic resin: resol phenolic resin, commercially available product.

Water-soluble polycarboxylic acid: oxalic acid, commercially available product.

Water-soluble polyamine: polyethylene polyamine, commercially available product.

The other raw materials used in the examples and comparative examples were all commercially available products.

### Preparation Example 1

### Water-soluble thermosetting resin EP1-sulfonated bisphenol A epoxy resin

(a) 57g of bisphenol A, 0.02g of ferric chloride and 50g of concentrated sulfuric acid were contacted for carrying out the sulfonation reaction at a reaction temperature of 130°C for a reaction time of 3h, a sulfonated bisphenol compound BPAS-1 was obtained; wherein the molar ratio of bisphenol A to concentrated sulfuric acid was 1:2, and the mass ratio of bisphenol A to ferric chloride was 1:0.00035.
(b) 8g of NaOH was dissolved in deionized water, 48g of BPAS-1 was added, and 18g of epichlorohydrin was dropwise added at 50 °C for performing the polycondensation reaction at a reaction temperature of 50°C for a reaction time of 3h, a water-soluble thermosetting resin EP1 was obtained, wherein the mass ratio of BPAS-1 to NaOH was 1:0.17. The mass ratio of BPAS-1 to epichlorohydrin was 1:0.375.

Wherein the content of S element in the water-soluble thermosetting resin EP1 was 10.8wt%, the epoxy equivalent was 110g/eg, the weight average molecular weight was 2,659g/mol, R1 was C1 alkylene, R2 was 1, R3 was 1, M was Na, and m1+m2=2.

### Preparation Example 2

### Water-soluble thermosetting resin EP2-sulfonated bisphenol A epoxy resin

A water-soluble thermosetting resin was prepared according to the method of Preparation Example 1, except that the addition amount of concentrated sulfuric acid was 70.4g, and the molar ratio of bisphenol A to concentrated sulfuric acid was 1:2.3.

The content of S element in the water-soluble thermosetting resin EP2 was 12.8wt%, the epoxy equivalent was 190g/eg, the weight average molecular weight was 4,568 g/mol, and m1+m2=2.3.

### Preparation Example 3

### Water-soluble thermosetting resin EP3-sulfonated bisphenol A epoxy resin

A water-soluble thermosetting resin was prepared according to the method of Preparation Example 1, except that the addition amount of concentrated sulfuric acid was 100g, and the molar ratio of bisphenol A to concentrated sulfuric acid was 1:3.3.

The content of S element in the water-soluble thermosetting resin EP3 was 14.7wt%, the epoxy equivalent was 238g/eg, the weight average molecular weight was 6,800 g/mol, and m1+m2=3.3.

### Preparation Example 4

### Water-soluble thermosetting resin EP4-sulfonated bisphenol S epoxy resin

A water-soluble thermosetting resin was prepared according to the method of Preparation Example 1, except that 57g of bisphenol A was replaced with 64.5g of bisphenol S, the molar ratio of bisphenol A to concentrated sulfuric acid was 1: 1.8.

The content of S element in the water-soluble thermosetting resin EP4 was 8.3wt%, the epoxy equivalent was 170g/eg, the weight average molecular weight was 5,907 g/mol, and m1+m2=1.8.

### Preparation Example 5

### Water-soluble thermosetting resin EP5-sulfonated bisphenol F epoxy resin

A water-soluble thermosetting resin was prepared according to the method of Preparation Example 1, except that 57g of bisphenol A was replaced with 48.5g of bisphenol F, the molar ratio of bisphenol F to concentrated sulfuric acid was 1: 2.5.

The content of S element in the water-soluble thermosetting resin EP4 was 11.2wt%, the epoxy equivalent was 150g/eg, the weight average molecular weight was 4,650 g/mol, and m1+m2=2.5.

### Preparation Example 6

### Water-soluble thermosetting resin EP6-bisphenol AF epoxy resin

A water-soluble thermosetting resin was prepared according to the method of Preparation Example 1, except that 57g of bisphenol A was replaced with 84g of bisphenol AF, the molar ratio of bisphenol AF to concentrated sulfuric acid was 1: 2.4.

The content of S element in the water-soluble thermosetting resin EP6 was 10.8wt%, the epoxy equivalent was 123g/eg, the weight average molecular weight was 3,059 g/mol, and m1+m2=2.4.

### Preparation Example 7

### Water-soluble thermosetting resin EP7-bisphenol B epoxy resin

A water-soluble thermosetting resin was prepared according to the method of Preparation Example 1, except that 57g of bisphenol A was replaced with 60.5g of bisphenol B, the molar ratio of bisphenol B to concentrated sulfuric acid was 1: 2.4.

The content of S element in the water-soluble thermosetting resin EP7 was 11wt%, the epoxy equivalent was 170g/eg, the weight average molecular weight was 4,383 g/mol, and m1+m2=2.4.

### Example 1

S1: 55 parts by weight of a water-soluble thermosetting resin EP1, 37.2 parts by weight of epoxy resin (E51), 3.6 parts by weight of an emulsifier octadecyl trimethyl ammonium chloride, 2 parts by weight of an emulsifier N',N-ethylene dioctadecyl dimethyl ammonium chloride and 27 parts by weight of water were uniformly stirred to obtain a first component. After testing, the hydrophilic group content N contained in the resin of said first component was 0.003mol/g, and the apparent viscosity of the first component was 390mPa·s.

S2: 66.4 parts by weight of a second component water-soluble phenolic resin (curing agent) was added into the first component, and mixed sufficiently to obtain a phase change material liquid, wherein the mass ratio of said first component to said second component was 1:0.53.

S3: The phase change material liquid was placed in an aging tank and heated under the conditions of a pressure of 40MPa and a temperature of 120°C for 6h to obtain a solid-phase proppant A1, which has a honeycomb structure with a porosity of 16.5%, a pore diameter of 0.6 mm, a pore density of 58 per cm², and a density of 0.930g/cm³. Its deformation rate under a pressure of 40MPa and a temperature of 150°C was 5%. The compressive strength of said honeycomb solid-phase proppant at a temperature of 150°C was 40MPa.

FIG. 1 was a photograph of a honeycomb solid-phase proppant A1. As can be seen from FIG. 1 the solid-phase proppant had a honeycomb structure and contained interconnected channels.

### Example 2

S1: 93 parts by weight of a water-soluble thermosetting resin EP1, 55.8 parts by weight of epoxy resin (E51), 7.9 parts by weight of an emulsifier octadecyl trimethyl ammonium chloride, 7 parts by weight of an emulsifier N',N-ethylene dioctadecyl dimethyl ammonium chloride and 60 parts by weight of water were uniformly stirred to obtain a first component. After testing, the hydrophilic group content N contained in the resin of said first component was 0.0032mol/g, and the apparent viscosity of the first component was 219mPa·s.

S2: 90 parts by weight of a second component water-soluble phenolic resin (curing agent) was added into the first component, and mixed sufficiently to obtain a phase change material liquid, wherein the mass ratio of said first component to said second component was 1:0.4.

S3: The phase change material liquid was placed in an aging tank and heated under the conditions of a pressure of 40MPa and a temperature of 120°C for 6h to obtain a solid-phase proppant A2, which has a honeycomb structure with a porosity of 21.6%, a pore diameter of 0.4mm, a pore density of 172 per cm², and a density of 0.872g/cm³. Its deformation rate under a pressure of 40MPa and a temperature of 150°C was 3%. The compressive strength of said honeycomb solid-phase proppant at a temperature of 150°C was 40MPa.

### Example 3

S1: 65 parts by weight of a water-soluble thermosetting resin EP1, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.0031mol/g, and the apparent viscosity of the first component was 333mPa·s.

S2: 120 parts by weight of a second component water-soluble phenolic resin (curing agent) was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A3, which has a honeycomb structure with a porosity of 28.6%, a pore diameter of 0.3mm, a pore density of 405 per cm², and a density of 0.885g/cm³. Its deformation rate under a pressure of 40MPa and a temperature of 150°C was 1%. The compressive strength of said honeycomb solid-phase proppant at a temperature of 150°C was 40MPa.

### Example 4

S1: 65 parts by weight of a water-soluble thermosetting resin EP2, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 60 parts by weight of water were uniformly stirred to obtain a first component. After testing, the hydrophilic group content N contained in the resin of said first component was 0.0039mol/g, and the apparent viscosity of the first component was 363mPa·s.

S2: 120 parts by weight of a second component water-soluble phenolic resin (curing agent) was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A4, which has a honeycomb structure with a porosity of 28.6%, a pore diameter of 0.5mm, a pore density of 146 per cm², and a density of 0.888g/cm³. Its deformation rate under a pressure of 40MPa and a temperature of 150°C was 2%. The compressive strength of said honeycomb solid-phase proppant at a temperature of 150°C was 40MPa.

### Example 5

S1: 65 parts by weight of a water-soluble thermosetting resin EP3, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.0044mol/g, and the apparent viscosity of the first component was 393mPa·s.

S2: 120 parts by weight of a second component water-soluble phenolic resin (curing agent) was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A5, which has a honeycomb structure with a porosity of 23.1%, a pore diameter of 0.65mm, a pore density of 70 per cm², and a density of 0.889g/cm³. Its deformation rate under a pressure of 40MPa and a temperature of 150°C was 5%. The compressive strength of said honeycomb solid-phase proppant at a temperature of 150°C was 40MPa.

### Example 6

S1: 65 parts by weight of a water-soluble thermosetting resin EP4, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.0029mol/g, and the apparent viscosity of the first component was 165mPa·s.

S2: 120 parts by weight of a second component water-soluble phenolic resin (curing agent) was added into the first component, and mixed sufficiently to obtain a phase change material liquid, wherein the mass ratio of said first component to said second component was 1:0.7.

S3: The phase change material liquid was placed in an aging tank and heated under the conditions of a pressure of 40MPa and a temperature of 120°C for 6h to obtain a solid-phase proppant A6, which has a honeycomb structure with a porosity of 19.1%, a pore diameter of 0.58mm, a pore density of 72 per cm² and a density of 0.900g/cm³. Its deformation rate under a pressure of 40MPa and a temperature of 150°C was 5.5%. The compressive strength of said honeycomb solid-phase proppant at a temperature of 150°C was 40MPa.

### Example 7

S1: 65 parts by weight of a water-soluble thermosetting resin EP5, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.0034mol/g, and the apparent viscosity of the first component was 144mPa·s.

S2: 120 parts by weight of a second component water-soluble phenolic resin was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A7, which has a honeycomb structure with a porosity of 24.1%, a pore diameter of 0.44mm, a pore density of 159 per cm², and a density of 0.886g/cm³. Its deformation rate under a pressure of 40MPa and a temperature of 150°C was 4.8%. The compressive strength of said honeycomb solid-phase proppant at a temperature of 150°C was 40MPa.

### Example 8

S1: 65 parts by weight of a water-soluble thermosetting resin EP6, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 154mPa·s.

S2: 120 parts by weight of a second component water-soluble polyamine (polyethylene polyamine) was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A8, which has a honeycomb structure with a porosity of 22.1%, a pore diameter of 0.38mm, a pore density of 195 per cm², and a density of 0.889g/cm³. Its deformation rate under a pressure of 40MPa and a temperature of 150°C was 5.3%. The compressive strength of said honeycomb solid-phase proppant at a temperature of 150°C was 40MPa.

### Example 9

S1: 65 parts by weight of a water-soluble thermosetting resin EP7, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 234mPa·s.

S2: 120 parts by weight of a second component water-soluble phenolic resin was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A9,which has a honeycomb structure with a porosity of 27%, a pore diameter of 0.45mm, a pore density of 170 per cm², and a density of 0.880g/cm³. Its deformation rate under a pressure of 40MPa and a temperature of 150°C was 5.6%. The compressive strength of said honeycomb solid-phase proppant at a temperature of 150°C was 40MPa.

### Example 10

S1: 65 parts by weight of a water-soluble thermosetting resin EP7, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 363mPa·s.

S2: 120 parts by weight of a second component water-soluble polyamine was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A10, which has a honeycomb structure with a porosity of 15%, a pore diameter of 0.7mm, a pore density of 39 per cm², and a density of 0.940g/cm³. Its deformation rate under a pressure of 40MPa and a temperature of 150°C was 4%. The compressive strength of said honeycomb solid-phase proppant at a temperature of 150°C was 40MPa.

### Example 11

S1: 65 parts by weight of a water-soluble thermosetting resin EP7, 42 parts by weight of unsaturated resin 901, 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 297mPa·s.

S2: 120 parts by weight of a second component water-soluble phenolic resin was added into the first component, and mixed sufficiently to obtain a phase change material liquid.

S3: The phase change material liquid was placed in an aging tank and heated under the conditions of a pressure of 40MPa and a temperature of 120°C for 6h to obtain a solid-phase proppant A11, which has a honeycomb structure with a porosity of 18%, a pore diameter of 0.7mm, a pore density of 47 per cm², and a density of 0.910g/cm³. Its deformation rate under a pressure of 40MPa and a temperature of 150°C was 5%. The compressive strength of said honeycomb solid-phase proppant at a temperature of 150°C was 35MPa.

### Example 12

S1: 65 parts by weight of a water-soluble thermosetting resin EP7, 42 parts by weight of epoxy resin E44, 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 366mPa·s.

S2: 120 parts by weight of a second component water-soluble phenolic resin was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A12, which has a honeycomb structure with a porosity of 38%, a pore diameter of 0.59mm, a pore density of 139 per cm², and a density of 0.851g/cm³. Its deformation rate under a pressure of 40MPa and a temperature of 150°C was 8.1%. The compressive strength of said honeycomb solid-phase proppant at a temperature of 150°C was 20MPa.

### Example 13

S1: 65 parts by weight of a water-soluble thermosetting resin EP7, 42 parts by weight of epoxy resin F51, 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 186mPa·s.

S2: 120 parts by weight of a second component water-soluble phenolic resin was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A13, which has a honeycomb structure with a porosity of 30%, a pore diameter of 0.59mm, a pore density of 110 per cm², and a density of 0.870g/cm³. Its deformation rate under a pressure of 40MPa and a temperature of 150°C was 7.8%. The compressive strength of said honeycomb solid-phase proppant at a temperature of 150°C was 15MPa.

### Example 14

S1: 65 parts by weight of a water-soluble thermosetting resin EP7, 42 parts by weight of epoxy resin E51, 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.003mol/g, and the apparent viscosity of the first component was 387mPa·s.

S2: 120 parts by weight of a second component water-soluble polycarboxylic acid (oxalic acid) was added into the first component, and mixed sufficiently to obtain a phase change material liquid, wherein the mass ratio of said first component to said second component was 1:0.72.

S3: The phase change material liquid was placed in an aging tank and heated under the conditions of a pressure of 40MPa and a temperature of 120°C for 6h to obtain a solid-phase proppant A14, which has a honeycomb structure with a porosity of 26%, a pore diameter of 0.48mm, a pore density of 144 per cm², and a density of 0.881g/cm³. Its deformation rate under a pressure of 40MPa and a temperature of 150°C was 6.5%. The compressive strength of said honeycomb solid-phase proppant at a temperature of 150°C was 18MPa.

### Example 15

S1: 65 parts by weight of a water-soluble thermosetting resin EP1, 42 parts by weight of epoxy resin (E51), 6 parts by weight of an emulsifier octadecyl trimethyl ammonium chloride, 3 parts by weight of an emulsifier N',N-ethylene dioctadecyl dimethyl ammonium chloride and 50 parts by weight of water were uniformly stirred to obtain a first component. After testing, the hydrophilic group content N contained in the resin of said first component was 0.0031mol/g, and the apparent viscosity of the first component was 333mPa·s.

S2: 120 parts by weight of a second component water-soluble phenolic resin (curing agent) was added into the first component, and mixed sufficiently to obtain a phase change material liquid, wherein the mass ratio of said first component to said second component was 1:0.72.

S3: A fracturing fluid (100g of polyacrylamide fracturing fluid with a concentration of 1% and 0.04g of ammonium persulfate) was injected into an aging tank, the fracturing fluid was disposed at the bottom of the aging tank, the phase change material liquid was placed in the aging tank and heated under the conditions of a pressure of 40MPa and a temperature of 120°C for 6h to obtain a solid-phase proppant A15, which has a honeycomb structure with a porosity of 38%, a pore diameter of 0.8mm, a pore density of 76 per cm², and a density of 0.852g/cm³. Its deformation rate under a pressure of 40MPa and a temperature of 150°C was 26%. The compressive strength of said honeycomb solid-phase proppant at a temperature of 150°C was 7MPa.

### Example 16

The honeycomb solid-phase proppant was prepared according to the method in Example 15, except that the step S3 was different, specifically:
S3: A fracturing fluid (100g of polyacrylamide fracturing fluid with a concentration of 1% and 0.04g of ammonium persulfate) was injected into an aging tank, the fracturing fluid was disposed at the bottom of the aging tank, 10 parts by weight of sulfonated p-benzoquinone aqueous solution with a concentration of 10wt% was injected into the aging tank such that the free radical scavenger was disposed above the fracturing fluid; the phase change material liquid was placed in the aging tank and heated under the conditions of a pressure of 40MPa and a temperature of 120°C for 6h to obtain a solid-phase proppant A16, which has a honeycomb structure with a porosity of 28%, a pore diameter of 0.5mm, a pore density of 143 per cm², and a density of 0.880g/cm³. Its deformation rate under a pressure of 40MPa and a temperature of 150°C was 1%. The compressive strength of said honeycomb solid-phase proppant at a temperature of 150°C was 40MPa.

As can be seen from the above examples, when the fracturing method provided by the present disclosure is performed under the conditions of simulating stratum, the phase change material liquid can undergo a phase transition to form a honeycomb solid-phase proppant with a specific pore structure, and the honeycomb solid-phase proppant has a low deformation rate under the high-temperature and high-pressure conditions, and has a high compressive strength under the high-temperature condition, thus it can meet the use requirements of proppants in oil reservoir development.

### Test Example

The permeabilities of the honeycomb solid-phase proppants A1-A16, quartz sand and ceramsite sand were tested respectively, wherein a high-pressure displacement device was used for testing according to the Enterprise Standard Q/SH1020 of Sinopec Shengli Oilfield Administration "Method for Determining Permeability of Consolidated Rock Core with High Permeability", the results are shown in Table 1.

**Table 1**

| | Permeability under different confining pressures (millidarcy) | | | | |
|---|---|---|---|---|---|
| | 10MPa | 20MPa | 30MPa | 40MPa | 50MPa |
| A1 | 3860 | 2675 | 1563 | 670 | 155 |
| A2 | 5000 | 5000 | 3690 | 1864 | 698 |
| A3 | 5000 | 5000 | 5000 | 5000 | 5000* |
| A4 | 5000 | 5000 | 5000 | 3264 | 1986 |
| A5 | 3978 | 2867 | 1799 | 786 | 293 |
| A6 | 2965 | 1986 | 895 | 98 | 13 |
| A7 | 3094 | 2653 | 1980 | 368 | 15 |
| A8 | 2961 | 1950 | 932 | 215 | 9 |
| A9 | 3924 | 2873 | 1620 | 320 | 23 |
| A10 | 4025 | 3321 | 961 | 12 | 0 |
| A11 | 1622 | 320 | 2 | 0 | 0 |
| A12 | 562 | 15 | 0 | 0 | 0 |
| A13 | 598 | 20 | 0 | 0 | 0 |
| A14 | 459 | 2 | 0 | 0 | 0 |
| A15 | 3 | 0 | 0 | 0 | 0 |
| A16 | 5000 | 5000 | 5000 | 5000 | 5000 |
| Quartz sand ¹ | 654 | 320 | 23 | 2 | 2 |
| Ceramsite sand ² | 1260 | 1260 | 962 | 899 | 865 |

| | | | | | |
|---|---|---|---|---|---|
| * In the present disclosure, 5000 millidarcy in the test example does not represent the upper limit of the permeability, but only the upper limit of the high pressure displacement device test instrument. 1- The particle diameter of the quartz sand is 400-800µm. 2- The particle diameter of the ceramsite sand is 400-800µm. | | | | | |

As can be seen from Table 1, compared with quartz sand and ceramsite sand, the honeycomb solid-phase proppant provided by the present disclosure also has excellent permeability, especially under a high pressure condition, the honeycomb solid-phase proppant provided by the present disclosure has better permeability than quartz sand and ceramsite sand. That is, the honeycomb solid-phase proppant provided by the present disclosure can be used as a proppant for oil reservoir development, and there is no need to further add quartz sand and ceramsite sand as the proppant during the fracturing process.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A phase change fracturing method comprising:
injecting a phase change material liquid into a stratum, wherein the phase change material liquid undergoes phase transition under the stratum condition to form a honeycomb solid-phase proppant, thereby completing phase change fracturing.

2. The phase change fracturing method according to claim 1, wherein the honeycomb solid-phase proppant includes interconnected channels.

3. The phase change fracturing method according to claim 1 or 2, wherein a porosity of the honeycomb solid-phase proppant is within a range of 1%-40%, preferably within a range of 20% -30%;
Preferably, a poro size of the honeycomb solid-phase proppant is within a range of 0.1-0.7 mm; more preferably within a range of 0.2-0.6 mm;
preferably, a pore density of the honeycomb solid-phase proppant is within a range of 20-450 per cm², more preferably within a range of 50-300 per cm².

4. The phase change fracturing method according to any one of claims 1-3, wherein a density of the honeycomb solid-phase proppant is within a range of 0.85 g/cm³-0.95 g/cm³, preferably within a range of 0.86 g/cm³-0.93 g/cm³.

5. The phase change fracturing method according to any one of claims 1-4, wherein a compressive strength of the honeycomb solid-phase proppant within a temperature range of 60-150°C is greater than or equal to 20MPa, preferably greater than or equal to 30MPa,;
preferably, a deformation rate of the honeycomb solid-phase proppant under a pressure of 40MPa and within the temperature range of 60-150°C is 8% or less, more preferably 4% or less.

6. The phase change fracturing method according to any one of claims 1-5, wherein the phase change material liquid comprises a first component and a second component;
the first component comprises a water-soluble thermosetting resin, a solvent-type thermosetting resin, an emulsifier and water;
the second component comprises a curing agent;
the water-soluble thermosetting resin has a structure represented by formula I; 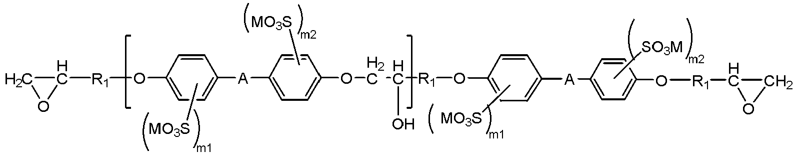 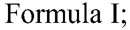
R₁ is C1-C4 alkylene;
A is 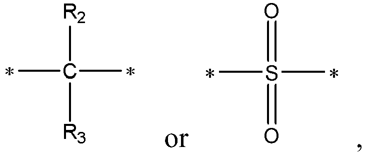 wherein R₂ and R₃ are each independently H, CH₃, CF₃ or CH₂CH₃;
0<m1+m2≤8;
M is K or Na.

7. The phase change fracturing method according to claim 6, wherein R₁ is C1-C3 alkylene;
preferably, A is 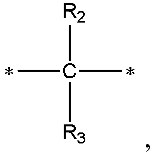 wherein R₂ and R₃ are each independently CH₃, H, CF₃ or CH₂CH₃;
M is Na.

8. The phase change fracturing method according to claim 6 or 7, wherein a content of S element is within a range of 6-20wt%, preferably within a range of 10-15wt%, based on the total weight of the water-soluble thermosetting resin;
preferably, an epoxy equivalent of the water-soluble thermosetting resin is within a range of 100 g/eq-300 g/eq, more preferably within a range of 150 g/eq-200 g/eq;
preferably, a weight average molecular weight of the water-soluble thermosetting resin is within a range of 2,000 g/mol - 10,000 g/mol, more preferably within a range of 3,000 g/mol - 5,000 g/mol.

9. The phase change fracturing method according to any one of claims 6-8, wherein a hydrophilic group content N in the resin of the first component is within a range of 0.002 mol/g-0.006 mol/g, preferably within a range of 0.0025 mol/g-0.004 mol/g.

10. The phase change fracturing method according to any one of claims 6-9, wherein an apparent viscosity of the first component at 25°C is within a range of 100 mPa·s - 400 mPa·s, preferably within a range of 200 mPa·s - 300 mPa·s.

11. The phase change fracturing method according to any one of claims 6-10, wherein the mass ratio of the first component and the second component is 1: (0.4-0.8), preferably 1: (0.6-0.8).

12. The phase change fracturing method according to any one of claims 6-11, wherein the first component contains 55-93 parts by weight of the water-soluble thermosetting resin, 37-56 parts by weight of the solvent-type thermosetting resin, 22-88 parts by weight of water, and 5-15 parts by weight of the emulsifier;
preferably, the first component contains 60-80 parts by weight of the water-soluble thermosetting resin, 40-45 parts by weight of the solvent-type thermosetting resin, 25-80 parts by weight of water, and 8-13 parts by weight of the emulsifier.

13. The phase change fracturing method according to any one of claims 6-12, wherein the solvent-type thermosetting resin is at least one selected from the group consisting of epoxy resin, unsaturated resin and polyimide;
preferably, the curing agent is at least one selected from the group consisting of water-soluble polymeric polyamine, water-soluble polymeric polycarboxylic acid, water-soluble phenolic resin, small-molecule polyamine, and small-molecule polycarboxylic acid.

14. The phase change fracturing method according to any one of claims 6-13, wherein the emulsifier is selected from a cationic emulsifier and/or an anionic emulsifier, preferably a cationic emulsifier.

15. The phase change fracturing method according to any one of claims 1-14, wherein a conditions of phase transition comprising:
a phase transition pressure within a range of 0MPa-50MPa, a phase transition temperature within a range of 70°C-150°C, and a phase transition time from 10min to 6h.

16. The phase change fracturing method according to any one of claims 1-15, wherein the phase change material liquid is injected into the stratum at a rate of 1-20m³/min.

17. The phase change fracturing method according to any one of claims 1-16, wherein the fracturing method further comprising: injecting a free radical scavenger into the stratum;
preferably, an injection volume of the free radical scavenger is within a range of 1-20m³.

18. The phase change fracturing method according to claim 17, wherein the free radical scavenger is selected from quinone compounds and/or phenolic compounds.
